# EUROPÄISCHE PATENTSCHRIFT

(11) **EP 2 709 809 B1**
(45) Veröffentlichungstag und Bekanntmachung des Hinweises auf die Patenterteilung: **04.04.2018**
(21) Anmeldenummer: 12722364.2
(22) Anmeldetag: 19.05.2012
(51) Int. Cl.: B29B 11/16, B29C 70/54, B29B 15/10, B29C 70/48

(54) **VERFAHREN UND ANLAGE ZUM AUFTRAGEN EINES BINDEMITTELS AUF ZUMINDEST EINE SCHICHT EINES MEHRSCHICHTIGEN VORFORMLINGS**
METHOD AND SYSTEM DEVICE FOR APPLYING A BINDER TO AT LEAST ONE LAYER OF A MULTI-LAYER PREFORM
PROCÉDÉ ET INSTALLATION POUR L'APPLICATION D'UN LIANT SUR AU MOINS UNE COUCHE D'UNE PRÉFORME MULTICOUCHE

(30) Priorität: 19.05.2011 DE 102011076150
(43) Veröffentlichungstag der Anmeldung: 26.03.2014
(73) Patentinhaber: Dieffenbacher GmbH Maschinen- und Anlagenbau, 75031 Eppingen (DE)
(72) Erfinder: FÜRST, Tobias, 76227 Karlsruhe (DE)
(86) Internationale Anmeldenummer: PCT/EP2012/059314
(87) Internationale Veröffentlichungsnummer: WO 2012/156523

(56) Entgegenhaltungen:
- WO-A1-93/08322
- WO-A2-2007/101578
- DE-A1- 3 640 906
- "Thermisches Spritzen", Wikipedia , 26. Februar 2011 (2011-02-26), XP55035485, Gefunden im Internet: URL:http://de.wikipedia.org/w/index.php?ti tle=Thermisches_Spritzen&oldid=85805368 [gefunden am 2012-08-14]
- Anonymous: "Was ist Thermisches Spritzen", , 15 June 2009 (2009-06-15), XP055209429, Retrieved from the Internet: URL:http://www.gts-ev.de/html_d/ts-info.ht m [retrieved on 2015-08-25]

## Beschreibung

Die Erfindung betrifft ein Verfahren zum Auftragen eines Bindemittels auf zumindest eine Schicht eines mehrschichtigen Vorformlings, insbesondere im Zuge der Herstellung von faserverstärkten Kunststoff-Formteilen mit einem derartigen Vorformling nach dem Oberbegriff des Anspruches 1 und eine Anlage nach dem Oberbegriff des Anspruches 9. Im Zuge der Herstellung von faserverstärkten Kunststoffbauteilen, auch Faserverbundbauteile genannt, ist insbesondere in der industriellen Anwendung das RTM-Verfahren (Resin-Transfer-Moulding-Verfahren) gängige Praxis. Der gesamte Herstellungsprozess bis zu einem verwendungsfähigen Kunststoffbauteil besteht aus mehreren nachfolgend ablaufenden Einzelprozessen. In einem ersten Verfahrensschritt werden Faserhalbzeuge (Preforms/Prepregs) hergestellt. In diesem Preform-Prozess werden in der Regel mehrschichtige Gewebe oder Fasergelege üblicherweise in 2D (zweidimensional), also im Wesentlichen in einer Ebene, zusammengefügt, so dass das Faserhalbzeug im Wesentlichen bereits die notwendigen äußeren Konturen und teilweise auch bereits besondere und/oder mehrfache Schichten oder Schichtdicken aufweist. Vorzugsweise wird ein Bindemittel in die Trennebenen oder in das Gelege selbst eingebracht, das nach seiner Aktivierung und/oder Aushärtung zu einer Fixierung der Schichten zueinander und somit zur Festlegung einer festgelegten 3D-Form führt, welche in einem Umformwerkzeug (Umformwerkzeug, Drapierwerkzeug oder ähnliches) im weiteren Verlauf des Preform-Prozess geformt wird. Je nach Bedarf wird das Faserhalbzeug noch nachgeschnitten oder an vorgegebenen Stellen ausgestanzt, um eine noch präzisere Kontur zu erhalten. Nach dem Einlegen des Faserhalbzeugs in das Werkzeug der Presse werden die Werkzeughälften geschlossen und das notwendige Harz in die Kavität des Werkzeuges injiziert, wobei das Harz die Faserstruktur des Faserhalbzeuges imprägniert, die Fasern einschließt und fest in die Matrix einbindet. Nach dem Aushärten des Harzes kann das faserverstärkte Kunststoffbauteil entformt werden.

Neben dem RTM-Verfahren selbst legt bereits die Herstellung eines Faserhalbzeuges den Grundstein für den Erfolg der Herstellung eines Kunststoffbauteiles. Das Ziel ist es, nach der Formgebung des Vorformlings aus einem biegeschlaffen Material, einen Vorformling zu erhalten, der biegesteif genug ist, um vollständig automatisiert und prozesssicher in das Werkzeug einer RTM-Presse eingelegt werden zu können oder auch bis zur weiteren Verwendung transportiert und abgestapelt werden kann. Zur Herstellung, Umformung und Fixierung des Vorformlings gibt es eine Vielzahl an Möglichkeiten im einschlägigen Stand der Technik.

Die WO 93/08322 und die WO 2007/101578 beschreiben ein Verfahren und eine Anlage zum Auftragen eines Bindemittels.

Für die 3D-Umformung von mehrlagigen zweidimensionalen Zuschnitten aus Fasergeweben sind die folgenden Verfahrensschritte bekannt: Es werden Fasergewebe oder -gelege von einer Rolle abgewickelt und je nach Bedarf aus mehreren verschiedenen Geweben oder Gelegen, Formen und Größen zu einem Fasergewebestapel zusammengelegt. Dabei kann es notwendig sein, die Außen- und ggf. Innenkontur entsprechend einem Schnittmuster des Vorformlings respektive des Kunststoffformteils zu bearbeiten oder zuzuschneiden. Das Schnittmuster wird dabei aus einer Abwicklung des Vorformlings oder des Endbauteils erzeugt. Vorzugsweise wird dann der erstellte, im Wesentlichen ebene Fasergewebestapel mittels einer Drapiervorrichtung drapiert, respektive in eine dreidimensionale Vorform umgeformt. Um eben aus einem biegeschlaffen Fasergewebe einen im Wesentlichen biegesteifen Vorformling zu erhalten, ist es meist notwendig, dass zwischen die einzelnen Lagen ein Bindemittel eingebracht und ausgehärtet wird.

Dabei werden Auftragstechniken für feste oder geschmolzene Klebstoffe und für flüssige Klebstoffe unterschieden:
Eine Möglichkeit für die Applikation des Binders in fester Form ist das Bindervlies. Diese überwiegend thermoplastischen Wirrfadenmatten werden auf die gewünschte Form zugeschnitten, manuell oder per Roboter in den Lagenaufbau integriert und zu gegebenem Zeitpunkt im Preformprozess aufgeschmolzen, um die Anbindung zu den Fasern zu gewährleisten.

Pulverbinder oder Bindergranulate (überwiegend Epoxidharze mit thermoplastischem Charakter, aber auch konventionelle Thermoplaste möglich) können in fester oder geschmolzener Form aufgetragen werden. Bei der Verarbeitung in festem Zustand wird der Binder durch eine geeignete Streutechnik auf das Halbzeug aufgebracht und durch anschließendes Aufschmelzen auf dem Substrat fixiert. Auf diese Weise hergestelltes Halbzeugmaterial kann von den meisten Halbzeugherstellern als Rollenware geliefert werden. Nach dem Abrollen, dem Zuschnitt und der Bildung des Lagenaufbaus wird dieser erhitzt und der an den Einzellagen haftende Klebstoff verbindet die Schichten untereinander.

Eine andere Möglichkeit zur Verarbeitung von Pulverbindern ist der Hotmelt-Auftrag. Hierbei wird das Rohmaterial aufgeschmolzen, durch eine Pumpe über einen beheizten Schlauch in eine Dosiereinheit gefördert und anschließend über einen weiteren beheizten Schlauch durch eine Düse (beispielsweise als kontinuierlicher Faden) auf die Fasern versprüht. Die Applikation kann dabei direkt auf den fertigen Halbzeugzuschnitt während des Schichtaufbaus erfolgen. Im Gegensatz hierzu werden flüssige Klebstoffe als Dispersionen oder Lösungsmittelklebstoffe je nach Viskosität durch eine Düse versprüht (niederviskos) oder in Form einer Raupe (hochviskos) appliziert. Der Lagenaufbau und die Umformung in eine 3D-Form muss dabei vor dem Aushärten des Klebstoffs erfolgt sein.

Alle die obigen Verfahrens- und Verwendungsmöglichkeiten weisen jede für sich besondere Nachteile auf:
Beispielsweise ist bei einer Verwendung eines mit Klebstoff bestreuten Halbzeuges (Vliesrolle) der Verschnitt mit Klebstoff kontaminiert und muss als Sondermüll entsorgt oder kann nur mit Schwierigkeiten recycelt werden. Der Hotmelt-Auftrag oder das Versprühen von flüssigem Binder zeigt meist bei der Verwendung der notwendigen Düsen starke Nachteile durch Verschmutzung, Verstopfung und/oder nicht reproduzierbare Verfahrensparameter.

Die Aufgabe der Erfindung besteht darin, ein Verfahren und eine Vorrichtung anzugeben, mit dem gegenüber dem Stand der Technik in einer einfachen, genau dosier- und reproduzierbaren Art und Weise zumindest eine Teiloberfläche einer Schicht einer herzustellenden mehrschichtigen Gewebestruktur mit einem Bindemittel, respektive Klebstoff, beschichtet werden kann.

Es soll also ein Verfahren, eine Anlage und eine Vorrichtung zum Auftragen eines Bindemittels auf zumindest eine Schicht eines mehrschichtigen Vorformlings, insbesondere im Zuge der Herstellung von faserverstärkten Kunststoff-Formteilen mit einem derartigen Vorformling, geschaffen werden, wobei der Vorformling aus zumindest zwei Schichten und insbesondere zumindest eine Schicht aus einem Faserhalbzeug besteht und wobei während dem Zusammenstellen der Schichten auf zumindest eine Oberfläche einer Schicht ein Bindemittel aufgebracht wird.

Die Lösung der Aufgabe für das Verfahren besteht dabei darin, dass das Bindemittel pneumatisch auf das Faserhalbzeug gesprüht wird, dass während des Sprühens zumindest die Oberfläche des Bindemittels dergestalt aktiviert wird, dass zumindest die Oberfläche des aktivierten Bindemittels gegenüber der Schicht adhäsiv wirkt und dass ein wesentlicher Anteil des aktivierten Bindemittels nach Kontakt mit der Schicht an dieser haften bleibt und dass im Wesentlichen zwei Luftströmungen unterschieden werden, einmal von einer Dosiervorrichtung mit dem dosierten Bindemittel zu einer Applikationsvorrichtung und einen warmen oder erhitztem Luftstrom von der Applikationsvorrichtung zur zu beleimenden Schicht, während dem das Bindemittel aktiviert wird, dass in der Applikationsvorrichtung diese beiden Luftströmungen vermischt werden und dass als Mittel zur Abgabe des Bindemittels an einen ersten pneumatischen Transportabschnitt ein Anschluss und/oder eine Bindemitteldüse angeordnet ist..

Die Lösung der Aufgabe für eine Anlage besteht darin, dass in der Anlage zumindest eine, insbesondere bewegbare, Applikationsvorrichtung zur Aufbringung eines Bindemittels auf zumindest eine Schicht und zumindest eine Manipulationsvorrichtung zum Manipulieren und Zusammenstellen der Schichten zu einem Vorformling angeordnet ist, wobei die Applikationsvorrichtung Mittel zur Abgabe von Bindemittel und Mittel zum pneumatischen Transport des Bindemittels auf eine Schicht aufweist und dass ein Mittel zur Aktivierung zumindest der Oberfläche des Bindemittels zu einem aktivierten Bindemittel während des pneumatischen Transports angeordnet ist, wobei im Wesentlichen zwei Luftströmungen unterschieden werden, einmal von einer Dosiervorrichtung mit dem dosierten Bindemittel zu einer Applikationsvorrichtung und einen warmen oder erhitztem Luftstrom von der Applikationsvorrichtung zur zu beleimenden Schicht, während dem das Bindemittel aktiviert wird, und wobei in der Applikationsvorrichtung diese beiden Luftströmungen vermischt werden und dass als Mittel zur Abgabe des Bindemittels an einen ersten pneumatischen Transportabschnitt ein Anschluss und/oder eine Bindemitteldüse angeordnet ist..

Ein Vorteil besteht darin, dass eine Dosiereinheit die vorgegebene Menge an Bindemittel pro Zeiteinheit in einem pulverförmigen Zustand über einen Förderejektor in einen Druckluftschlauch dosiert. Damit sind sehr genaue und vor allem geringe Dosierungen möglich. Als Dosiereinheit kann beispielsweise ein Einfülltrichter mit darunter angeordneter Austrags- und Dosierschnecke verwendet werden. Der Luftstrom in dem Druckluftschlauch wird dabei mittels eines Kompressors zur Verfügung gestellt und über ein Drosselventil dem Förderejektor zugeführt. Die Druckluft aus dem Kompressor kann vorgewärmt sein oder zwischen Kompressor und Applikationsvorrichtung vorgewärmt werden. Der Druckluftschlauch fördert das Bindemittel, vorzugsweise in pulverförmiger Gestalt, pneumatisch bis an einen Anschluss an der Applikationsvorrichtung und ist somit mit dieser wirkverbunden. Am Anschluss wird das Bindemittel mittels einer Bindemitteldüse der Applikationsvorrichtung im Wesentlichen in Richtung eines zu beleimenden Faserhalbzeuges ausgegeben und mit einer Heißluftströmung, vorzugsweise aus einer Heißluftdüse, welche wiederum mit einer Heißluftquelle wirkverbunden ist, in Kontakt gebracht. Die Bindemitteldüse kann dabei direkt in der Heißluftströmung angeordnet sein oder ist von der Heißluftströmung beabstandet und übergibt das Bindemittel mittels des pneumatischen Luftstroms quasi im Flug. Je nach Ausführungsform wird die Heißluftströmung den kinematischen Vektor des Bindemittels mehr oder weniger verändern und das Bindemittel dabei vorzugsweise verwirbeln, um einen optimalen Wärmeübergang zwischen der Heißluft und dem aufzuheizenden Bindemittel zu gewährleisten. In dem ersten Transportabschnitt wird das Bindemittel innerhalb der Heißluftströmung aufgewärmt, bis es in einem zweiten Transportabschnitt zumindest teilweise in einen schmelzflüssigen Zustand wechselt. Spätestens im zweiten Transportabschnitt wird die kinematische Ausrichtung des Bindemittels im Wesentlichen in Richtung auf das zu beleimende Faserhalbzeug, vorzugsweise senkrecht dazu, ausgerichtet. Das an- oder aufgeschmolzene Bindemittel trifft schließlich auf das Faserhalbzeug und bleibt dort, durch den zumindest geschmolzenen Aggregatszustand der Oberfläche, kleben.

Mit der erfindungsgemäßen Lehre lassen sich mittels des Heißluftsprühauftrags von Pulverbinder gegenüber den Möglichkeiten des Standes der Technik (Bindervlies, Pulveraufstreuung, Faserhalbzeug mit Bindemittel, Hotmelt-Sprühauftrag) folgende Vorteile erzielen.

Gegenüber der Verwendung eines Bindervlieses (eigene Zwischenlage aus bindemittelhaltigem Material) ist zum einen kein eigener Zuschnitt oder keine Handhabung eines zusätzlichen Bindervlieses (eigene Schicht) notwendig. Das zusätzliche Klebstoffvlies würde dabei üblicherweise aus Thermoplasten bestehen, die wiederum eine eingeschränkte Verträglichkeit mit einer duromeren Matrix aufweisen und somit nur bedingt geeignet wären.

Die Aufstreuung von Granlulat oder Pulver auf eine zugeschnittene Schicht im Zuge der Herstellung der Preform ist (auch in nur einer Ebene) schwierig, da das Streuen von Pulver in vorgegebenen Mengen umständlich umzusetzen ist. Weiter ergibt in der Regel eine nicht zu vermeidende Staubentwicklung mit einer einhergehenden Verschmutzung des Arbeitsbereichs bei kleinen Partikelgrößen. Auch ist das Pulver während des Aufstreuens anfällig auf Luftbewegungen, haftet in der Regel nicht oder nicht ausreichend genug an dem Vlies und geht bei späteren Transportmanipulationen teilweise und unvorhersehbar wieder verloren. Eine reproduzierbare Produktion, insbesondere in der Massenproduktion, ist damit nicht gegeben.

Ein bindemittelbeinhaltendes Faserhalbzeug weist ein gleichmäßiges Flächengewicht an Klebstoff auf und kann nur mit zusätzlichem Aufwand an unterschiedlich gewünschte Bindemittelflächengewichte angepasst werden. Der Faserhalbzeugverschnitt ist dann mit Bindemittel kontaminiert und umständlich zu recyceln. Für die Deckschichten muss ein eigenes Faserhalbzeug beschafft und verarbeitet werden, da dieses kein Bindemittel aufweisen sollte. Insgesamt ist die Beschaffung der Gesamtmaterialien, aber auch des bindemittelbeinhaltenden Faserhalbzeugs teurer als die individuelle Beleimung des Faserhalbzeuges.

Gegenüber dem Hotmelt-Sprühauftrag (kontinuierlicher Faden) können mit der erfindungsgemäßen Lehre präzisere Dosierungen von kleinen Bindemittelmengen, geringe Flächengewichte und variable Auftragstiefen eingestellt werden. Durch die geringfügige thermische Belastung des Bindemittels wird dieses gegenüber dem Hotmelt-Verfahren deutlich geschont.

Nach der oben bereits aufgeführten erfindungsgemäßen Lehre zeichnet sich die Erfindung noch durch weiterführende Merkmale wie folgt aus:
Vorzugsweise wird zur Aktivierung des Bindemittels zu einem aktivierten Bindemittel ein Heißluftstrom verwendet.

Dabei soll zumindest die Oberfläche des Bindemittels durch die Aktivierung geschmolzen werden, aber es kann auch eine vollständige Aufschmelzung, insbesondere bei einem pulverförmigen (sehr kleinem) Bindemittel, vorgesehen sein. Das Bindemittel kann vor der Aktivierung dosiert werden.

Weiter ist es möglich, das Bindemittel in den Heißluftstrom pneumatisch oder mechanisch, insbesondere dosiert, einzubringen. Dazu kann das Bindemittel mittels einer Bindemitteldüse zerstäubt und/oder in den Heißluftstrom eingebracht werden. Beispielsweise wäre auch die Abgabe des Bindemittels aus einer Förder- und/oder Dosiervorrichtung denkbar, eventuell sogar über einen Venturi-Effekt der vorbeistreichenden pneumatischen Transportluft. Vorzugsweise wird das Bindemittel im Wesentlichen als Pulver in den Heißluftstrom eingebracht, was die Transportstrecke minimieren kann, weil durch die hohe Oberfläche und die kleine Partikelgröße der Aufheizungseffekt maximiert wird.

Als Mittel zum pneumatischen Transport in Richtung der Schicht können ein Kompressor und/oder eine Heißluftquelle zur Ausbildung eines Heißluftstromes angeordnet sein. Die Transportluft wird dabei so schnell durch den Fachmann eingestellt, dass vorzugsweise das Substrat, respektive das Faserhalbzeug nicht beschädigt wird. Mögliche Mittel zur Aktivierung des Bindemittels wären in einer Anlage eine Strahlungsquelle für Mikrowellen, Hochfrequenz und/oder Infrarotstrahlung, eine Heißluftquelle zur Ausbildung eines Heißluftstromes in dem das Bindemittel 1 zu einem aktivierten Bindemittel 9 wird. Alternativ könnte auch ein Konvektionsstrahler vorgesehen sein.

Zur Unterstützung der Aktivierung kann das Bindemittel bereits während der Dosierung und/oder kurz vor der Übergabe an das Transportmittel, respektive das Mittel zur Aktivierung vorgeheizt sein, damit die Aktivierung, während einer beispielsweisen kurzen Transportstrecke, während des pneumatischen Transportes schneller und effektiver durchgeführt werden kann.

Im Wesentlichen ist vorgesehen, dass die Applikationsvorrichtung gegenüber der bewegbaren Saugplatte respektive der zu beleimenden Schicht feststehend angeordnet ist und die zu beleimende Schicht, vorzugsweise in einem vorgegebenem Beleimungsmuster und/oder Beleimungsrhythmus, an der Applikationsvorrichtung vorbeigefahren wird. Damit ist eine optimale und bindemittelsparende Beleimung möglich. Um beispielsweise die Zykluszeiten zu verbessern und/oder andere Anwendungsfälle abdecken zu können, kann auch vorgesehen sein die Applikationsvorrichtung gegenüber der Schicht während des Beleimens zu verfahren. Auch ist eine Kombination beider Anwendungsfälle denkbar.

Die Erfindung unterscheidet im Wesentlichen also zwei Luftströmungen, einmal von der Dosiervorrichtung mit dem dosierten Bindemittel zur Applikationsvorrichtung und einen vorzugsweise warmen oder erhitztem Luftstrom von der Applikationsvorrichtung zur zu beleimenden Schicht, während dem das Bindemittel aktiviert wird. In der Applikationsvorrichtung werden diese beiden Luftströmungen vermischt. Als Mittel zur Abgabe des Bindemittels an den ersten pneumatischen Transportabschnitt ein Anschluss und/oder eine Bindemitteldüse angeordnet ist.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: eine erfindungsgemäße Anlage für die großindustrielle Anwendung in einer schematischen Seitenansicht,
- Figur 2: eine erfindungsgemäße Applikationsvorrichtung für das Bindemittel an ein Substrat in einer ersten Ausführungsform und
- Figur 3: eine nichterfindungsgemäße Applikationsvorrichtung für das Bindemittel an ein Substrat.

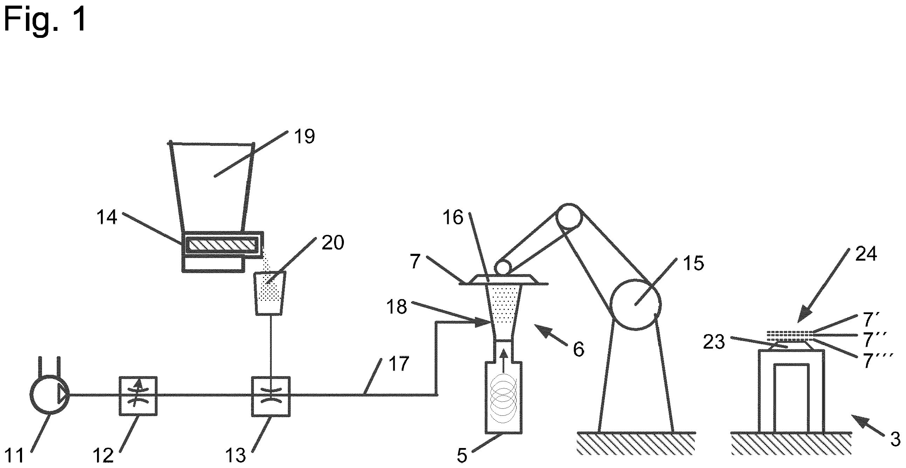

Figur 1 zeigt eine erfindungsgemäße Anlage für die großindustrielle Anwendung in einer schematischen Seitenansicht. Dabei wird das Bindemittel 19 in seiner angelieferten Rohform in eine Dosiereinheit 14 gegeben und von dort als dosiertes Bindemittel 20, vorzugsweise in pulverisiert oder in Pulverform, an einen Förderejektor 13 übergeben. Der Förderejektor 13 wird über ein Drosselventil 12 und einen damit wirkverbundenen Kompressor 11 mit Druckluft versorgt und fördert, unter Umständen als zweite Dosierregeleinrichtung verwendbar, das durch die Dosiereinheit 14 dosierte Bindemittel 20 durch eine Druckluftleitung 17, vorzugsweise als flexibler Druckluftschlauch ausgebildet, zu einem Anschluss 18 an der Applikationsvorrichtung 6. Anstelle des Kompressors 11 kann auch ein Druckluftspeichersystem (nicht dargestellt) angeordnet sein.

Die Applikationsvorrichtung 6 kann dabei in unterschiedlicher Form, vorzugsweise nach den beiden Ausführungsbeispielen, ausgebildet sein, wie später noch genauer beschrieben wird. In einer alternativen Ausbildungsform kann in vorstehender Regelstrecke und Anordnung das Bindemittel 19 undosiert oder das dosierte Bindemittel 20 vorgewärmt werden, um den Schmelzpunkt, zumindest der Oberfläche des Bindemittels, schneller zu erreichen. Vorzugsweise wird dabei eine Vorwärmtemperatur ausgewählt, bei der das Bindemittel noch nicht an seiner Oberfläche klebrig wird und somit nicht die entsprechenden Förderleitungen verstopft oder sich zu großvolumigen Koagulationen zusammenballt, die quasi als "Geschosse" das zu beleimende Substrat beschädigen könnten.

Hinsichtlich der Dosierung des Bindemittels ist bevorzugt, dass das Bindemittel 19 in der Dosiereinheit 14, vorzugsweise mit einer Förderschnecke, insbesondere beliebig klein, gravimetrisch dosiert als Bindemittel 20 in einen gleichbleibenden Luftstrom des Förderejektors 13 in die Druckluftleitung 17 gelangt. Hiermit ist es möglich sehr geringe Pulveraufträge pro Quadratmeter, zum Beispiel 1 g Bindemittel pro m², auf die Schicht aufzubringen. Dies führt zur einer massiven Bindemitteleinsparung gegenüber herkömmlichen Systemen. Die Heißluftquelle 5 kann direkt mit der Applikationsvorrichtung 6 über den Anschluss 10 wirkverbunden sein, oder es kann bei einer beweglichen Applikationsvorrichtung 6 auch ein flexibler Schlauch zwischengeschaltet sein, so dass ein geeigneter Manipulator (beispielsweise ein Industrieroboter oder anderes geeignetes Verfahrwerkzeug) nicht auch noch die Heißluftquelle 5 selbst zu manipulieren hat.

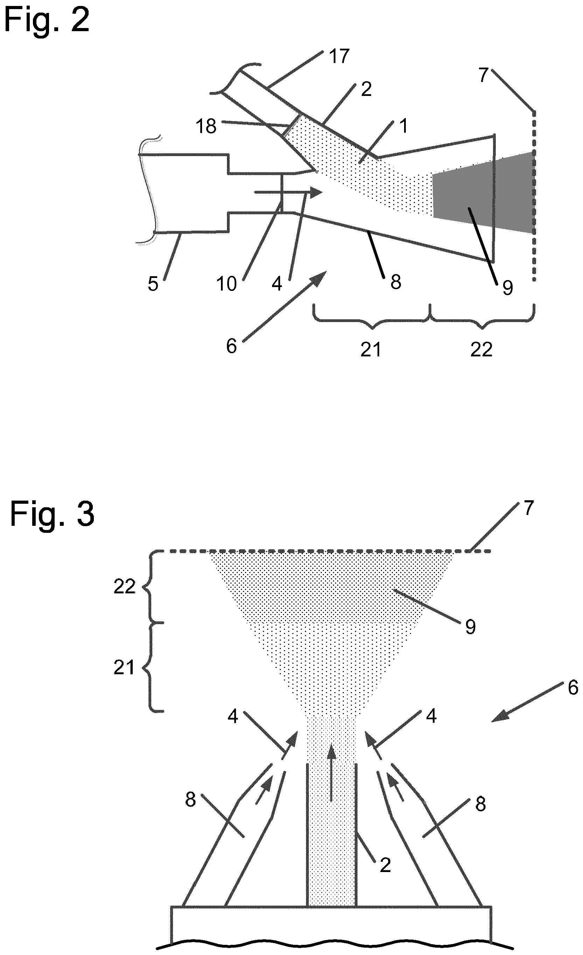

Nach Figur 2 wird in der Applikationsvorrichtung 6 nun ein Heißluftstrom 4 mittels einer geeigneten Heißluftquelle 5 erzeugt und das Bindemittel 1 wird, vorzugsweise mittels einer Bindemitteldüse 2, in den Heißluftstrom 4 eingebracht, wobei der Heißluftstrom 4, im Wesentlichen auf die zu beleimende Schicht 7, vorzugsweise senkrecht dazu, gerichtet ist. Man kann abstrahiert die Transportstrecke in einen ersten und zweiten Transportabschnitt 21, 22 unterteilen, wobei der erste Transportabschnitt 21 wie in Figur 2 vorzugsweise innerhalb einer Umhüllung stattfindet und es ermöglicht in einer geschützten Umgebung das Bindemittel 1 aufzuwärmen, wobei in einem zweiten Transportabschnitt 22 das Bindemittel bereits eine klebrige Oberfläche aufweist und anschließend auf die Schicht 7 stößt und dort kleben bleibt.

Im vorliegenden Beispiel nach Figur 1 hängt die Schicht 7 an einer Saugplatte 16 einer Manipulationsvorrichtung 15 (beispielsweise ein Industrieroboter oder anderes geeignetes Verfahrwerkzeug) und wird dabei über die Applikationsvorrichtung 6 in einem vorgegebenem Muster (Beleimbild) verfahren. Die Manipulationsvorrichtung 15 legt nach erfolgter Beleimung die Schicht 7 auf einer Drapiervorrichtung 3 ab. In vorliegendem Beispiel wäre die Schicht 7 die letzte (äußere) Schicht des Vorformlings 24, wobei die erste Schicht 7''' auf der Drapiervorrichtung 3, respektive direkt liegend auf der Drapierform 23, nicht beleimt wird, sondern nur die nachfolgenden Schichten, die wiederum auf eine bereits liegende Schicht 7ⁿ⁺¹ gelegt wird. N+1 ist dabei die äußerste (unten liegende) Schicht, die Schicht 7 die oberste, die als letztes beleimt wird, so dass das Bindemittel nur zwischen den Schichten 7, 7', 7", 7ⁿ⁺¹ angeordnet ist. Nach dem Ablegen der letzten Schicht 7 und Fertigstellung des Vorformlings 24 wird die zur Drapierform 23 als Matrize passende Patrize auf die Drapierform gedrückt und ein dreidimensionaler Vorformling 24 mit Druck und/oder Hitze ausgehärtet, der anschließend in einem weiteren separaten Verfahren mittels geeigneter Techniken, vorzugsweise mittels des RTM-Verfahrens (rapid transer molding), zu einem faserverstärkten Kunststoff-Formteil verarbeitet.

In Figur 3 findet sich ein weiteres Beispiel für eine vorzugsweise bewegbare Applikationsvorrichtung 6, in der das Bindemittel 1 aus einer Bindemitteldüse direkt in Richtung auf das Substrat, respektive eine Schicht 7, pneumatisch gefördert wird. Dabei wird, vorzugsweise von zwei Seiten, mittels Heißluftdüsen 8 ein Heißluftstrom 4 zur Aufwärmung des Bindemittels 1 zu einem aktivierten Bindemittel 9 eingesetzt. Nach Durchlaufen einer ersten Transportstrecke wird auch hier das Bindemittel 1 zu einem klebrigen aktivierten Bindemittel 9 und bleibt nach Auftreffen auf die Schicht dort kleben. Je nach Ausrichtung der Heißluftdüsen 8 kann der Heißluftstrom 4 eventuell zusätzlich zur Auffächerung des Bindemittels 1, 9 dienen.

Nicht dargestellt sind etwaige Anpassungen der Ausführungsbeispiele an mögliche Varianten der einzelnen Mittel, insbesondere zum Transport, der Düsen oder der Mittel zur Aktivierung des Bindemittels 1.

Die Anlage oder die Vorrichtung sind insbesondere zur Durchführung des Verfahrens geeignet, können aber auch eigenständig betrieben werden. (1420)

### Bezugszeichenliste: P1420

- 1.: Bindemittel
- 2.: Bindemitteldüse
- 3.: Drapiervorrichtung
- 4.: Heißluftstrom
- 5.: Heißluftquelle
- 6.: Applikationsvorrichtung
- 7.: Schicht (-en 7', 7", 7ⁿ⁺¹)
- 8.: Heißluftdüse
- 9.: Aktiviertes Bindemittel (mit angeheizter und klebriger Oberfläche)
- 10.: Anschluss 5 an 6
- 11.: Kompressor
- 12.: Drosselventil
- 13.: Förderejektor
- 14.: Dosiereinheit
- 15.: Manipulationsvorrichtung
- 16.: Saugplatte
- 17.: Druckluftleitung
- 18.: Anschluss 17 an 6
- 19.: Bindemittel
- 20.: Bindemittel (dosiert)
- 21.: erster Transportabschnitt
- 22.: zweiter Transportabschnitt
- 23.: Drapierform
- 24.: Vorformling

## Patentansprüche

1. Verfahren zum Auftragen eines Bindemittels auf zumindest eine Schicht eines mehrschichtigen Vorformlings, insbesondere im Zuge der Herstellung von faserverstärkten Kunststoff-Formteilen mit einem derartigen Vorformling, wobei der Vorformling (24) aus zumindest zwei Schichten (7, 7', 7", 7ⁿ⁺¹) und insbesondere zumindest eine Schicht (7, 7', 7", 7ⁿ⁺¹) aus einem Faserhalbzeug besteht, wobei während dem Zusammenstellen der Schichten (7, 7', 7", 7ⁿ⁺¹) auf zumindest eine Oberfläche einer Schicht (7, 7', 7", 7ⁿ⁺¹) ein Bindemittel (1, 9) aufgebracht wird,
wobei das Bindemittel (1, 9) pneumatisch auf die Schicht (7, 7', 7", 7ⁿ⁺¹) gesprüht wird, wobei während des Sprühens zumindest die Oberfläche des Bindemittels (1) dergestalt aktiviert wird, dass zumindest die Oberfläche des aktivierten Bindemittels (9) gegenüber der Schicht (7, 7', 7", 7ⁿ⁺¹) adhäsiv wirkt, und wobei ein wesentlicher Anteil des aktivierten Bindemittels (9) nach Kontakt mit der Schicht (7, 7', 7", 7ⁿ⁺¹) an dieser haften bleibt,
**dadurch gekennzeichnet, dass** im Wesentlichen zwei Luftströmungen unterschieden werden, einmal von einer Dosiervorrichtung mit dem dosierten Bindemittel (1, 9) zu einer Applikationsvorrichtung (6) und einen warmen oder erhitztem Luftstrom von der Applikationsvorrichtung (6) zur zu beleimenden Schicht, während dem das Bindemittel (1, 9) aktiviert wird,
dass in der Applikationsvorrichtung (6) diese beiden Luftströmungen vermischt werden und dass als Mittel zur Abgabe des Bindemittels (1, 9) an einen ersten pneumatischen Transportabschnitt (21) ein Anschluss und/oder eine Bindemitteldüse angeordnet ist.

2. Verfahren nach Anspruch **1,dadurch gekennzeichnet, dass** zumindest die Oberfläche des Bindemittels (1) durch die Aktivierung geschmolzen wird.

3. Verfahren nach einem oder mehreren der vorhergehenden Ansprüche, **dadurch gekennzeichnet, dass** zur Aktivierung des Bindemittels (1) zu einem aktivierten Bindemittel (9) ein Heißluftstrom (4) verwendet wird.

4. Verfahren nach einem oder mehreren der vorhergehenden Ansprüche, **dadurch gekennzeichnet, dass** das Bindemittel (1) vor der Aktivierung dosiert wird.

5. Verfahren nach einem oder mehreren der vorhergehenden Ansprüche, **dadurch gekennzeichnet, dass** das Bindemittel (1) in den Heißluftstrom (4) pneumatisch oder mechanisch, insbesondere dosiert, eingebracht wird.

6. Verfahren nach einem oder mehreren der vorhergehenden Ansprüche, **dadurch gekennzeichnet, dass** das Bindemittel (1) mittels einer Bindemitteldüse (2) zerstäubt und/oder in den Heißluftstrom (4) eingebracht wird.

7. Verfahren nach einem oder mehreren der vorhergehenden Ansprüche, **dadurch gekennzeichnet, dass** das Bindemittel (1) im Wesentlichen als Pulver in den Heißluftstrom (4) eingebracht wird.

8. Verfahren nach einem oder mehreren der vorhergehenden Ansprüche, **dadurch gekennzeichnet, dass** das Bindemittel (19) in der Dosiereinheit (14), vorzugsweise mit einer Förderschnecke, insbesondere beliebig klein, gravimetrisch dosiert als Bindemittel (20) in einen gleichbleibenden Luftstrom eines Förderejectors (13) in eine Druckluftleitung (17) gelangt.

9. Anlage zum Auftragen eines Bindemittels auf zumindest eine Schicht eines mehrschichtigen Vorformlings, insbesondere im Zuge der Herstellung von faserverstärkten Kunststoff-Formteilen mit einem derartigen Vorformling, wobei der Vorformling (24) aus zumindest zwei Schichten (7, 7', 7", 7ⁿ⁺¹) und insbesondere zumindest eine Schicht (7, 7', 7", 7ⁿ⁺¹) aus einem Faserhalbzeug besteht, wobei in der Anlage zumindest eine, insbesondere bewegbare, Applikationsvorrichtung (6) zur Aufbringung eines Bindemittels (1, 9) auf zumindest eine Schicht (7, 7', 7", 7ⁿ⁺¹) und zumindest eine Manipulationsvorrichtung (15) zum Manipulieren und Zusammenstellen der Schichten (7, 7', 7", 7ⁿ⁺¹) zu einem Vorformling (24) angeordnet ist, wobei die Applikationsvorrichtung (6) Mittel zur Abgabe von Bindemittel (1) und Mittel zum pneumatischen Transport des Bindemittels (1, 9) auf eine Schicht (7, 7', 7", 7ⁿ⁺¹) aufweist und das ein Mittel zur Aktivierung zumindest der Oberfläche des Bindemittels (1) zu einem aktivierten Bindemittel (9) während des pneumatischen Transports angeordnet ist wobei im Wesentlichen zwei Luftströmungen unterschieden werden, einmal von einer Dosiervorrichtung mit dem dosierten Bindemittel (1, 9) zu einer Applikationsvorrichtung (6) und einen warmen oder erhitztem Luftstrom von der Applikationsvorrichtung (6) zur zu beleimenden Schicht, während dem das Bindemittel (1, 9) aktiviert wird,
**dadurch gekennzeichnet, dass** in der Applikationsvorrichtung (6) diese beiden Luftströmungen vermischt werden und dass als Mittel zur Abgabe des Bindemittels (1, 9) an einen ersten pneumatischen Transportabschnitt (21) ein Anschluss und/oder eine Bindemitteldüse angeordnet ist.

10. Anlage nach Anspruch **9**, **dadurch gekennzeichnet, dass** als Mittel zum pneumatischen Transport zur Schicht (7, 7', 7", 7ⁿ⁺¹) an der Applikationsvorrichtung (6) ein Kompressor und/oder eine Heißluftquelle (5) zur Ausbildung eines Heißluftstromes (4) angeordnet ist.

11. Anlage nach einem oder mehreren der Ansprüche 9 bis 10, **dadurch gekennzeichnet, dass** als Mittel zur Aktivierung des Bindemittels (1) eine Heißluftquelle (5) zur Ausbildung eines Heißluftstromes (4) vorgesehen ist.

## Claims

1. A method for applying a binder to at least one layer of a multilayer preform, in particular in the course of the production of fiber-reinforced plastic molded parts with such a preform, wherein the preform (24) consists of at least two layers (7, 7', 7", 7ⁿ⁺¹) and in particular at least one layer (7, 7', 7", 7ⁿ⁺¹) of a semi-finished fiber product,
wherein a binder (1, 9) is applied during the assembly of the layers (7, 7', 7", 7ⁿ⁺¹) on at least one surface of a layer (7, 7', 7", 7ⁿ⁺¹),
wherein the binder (1, 9) is sprayed pneumatically onto the layer (7, 7', 7", 7ⁿ⁺¹),
wherein during spraying at least the surface of the binder (1) is activated in such a way that at least the surface of the activated binder (9) acts adhesively in relation to the layer (7, 7', 7", 7ⁿ⁺¹), and wherein a substantial portion of the activated binder (9) adheres to the layer (7, 7', 7", 7ⁿ⁺¹) after contact therewith, **characterized in that** substantially two air flows are distinguished, once from a metering device with the metered binder (1, 9) to an application device (6) and a warm or heated air flow from the application device (6) to the layer to be glued, during which the binder (1, 9) is activated, that in the application device (6) these two air flows are mixed and that a connection and/or a binder nozzle is arranged as a means for delivering the binder (1, 9) to a first pneumatic transport section (21).

2. A method according to claim 1 , **characterized in that** at least the surface of the binder (1) is melted by the activation.

3. A method according to one or more of the preceding claims, **characterized in that** a hot air stream (4) is used to activate the binder (1) to form an activated binder (9).

4. A method according to one or more of the preceding claims, **characterized in that** the binder (1) is metered before activation.

5. A method according to one or more of the preceding claims, **characterized in that** the binder (1) is introduced into the hot air stream (4) pneumatically or mechanically, in particular in a metered manner.

6. A method according to one or more of the preceding claims, **characterized in that** the binder (1) is atomized and/or introduced into the hot air stream (4) by means of a binder nozzle (2).

7. A method according to one or more of the preceding claims, **characterized in that** the binder (1) is introduced substantially as a powder into the hot air stream (4).

8. A method according to one or more of the preceding claims, **characterized** i n that the binder (19) in the metering unit (14), preferably with a screw conveyor, reaches as a binder (20) in a gravimetrically metered manner, in particular arbitrarily small, a constant air flow of a conveyor ejector (13) in a compressed air line (17).

9. An installation for applying a binder to at least one layer of a multilayer preform, in particular in the course of the production of fiber-reinforced plastic molded parts with such a preform, wherein the preform (24) consists of at least two layers (7, 7', 7", 7ⁿ⁺¹) and in particular at least one layer (7, 7', 7", 7ⁿ⁺¹) of a semi-finished fiber product, wherein in the installation at least one, in particular movable, application device (6) for applying a binder (1, 9) to at least one layer (7, 7', 7", 7ⁿ⁺¹) and at least one manipulation device (15) for manipulating and assembling the layers (7, 7', 7", 7ⁿ⁺¹) into a preform (24) are arranged, wherein the application device (6) comprises means for dispensing binder (1) and means for pneumatic transport of the binder (1, 9) on a layer (7, 7', 7", 7ⁿ⁺¹), and that a means is arranged for activating at least the surface of the binder (1) to an activated binder (9) during the pneumatic transport, wherein substantially two air flows are distinguished, once by a metering device with the metered binder (1, 9) to an application device (6) and a warm or heated air flow of the application device (6) to the layer to be glued, during which the binder (1, 9) is activated, **characterized in that** in the application device (6) these two air flows are mixed and that a connection and/or a binder nozzle is arranged as a means for delivering the binder (1, 9) to a first pneumatic transport section (21).

10. An installation according to claim 9, **characterized in that** as a means for pneumatic transport to the layer (7, 7', 7", 7ⁿ⁺¹) a compressor and/or a hot air source (5) for forming a hot air stream (4) is arranged on the application device (6).

11. An installation according to one or more of the claims 9 to 10, **characterized in that** a hot air source (5) for forming a hot air stream (4) is provided as a means for activating the binder (1).

## Revendications

1. Procédé pour appliquer un liant sur au moins une couche d'une ébauche en plusieurs couches, en particulier au cours de la fabrication de pièces moulées en matière plastique armée de fibres avec une telle ébauche, dans lequel l'ébauche (24) se compose d'au moins deux couches (7, 7', 7", 7ⁿ⁺¹) et au moins une couche (7, 7', 7", 7ⁿ⁺¹) se compose en particulier d'un semi-produit fibreux, un liant (1, 9) étant appliqué pendant l'assemblage des couches (7, 7', 7", 7ⁿ⁺¹) sur au moins une surface d'une couche (7, 7', 7", 7ⁿ⁺¹),
dans lequel le liant (1, 9) est pulvérisé sur la couche (7, 7', 7", 7ⁿ⁺¹) par des moyens pneumatiques, la surface au moins du liant (1) étant activée pendant la pulvérisation de telle manière que la surface au moins du liant activé (9) devienne adhésive par rapport à la couche (7, 7', 7", 7ⁿ⁺¹) et une part essentielle du liant activé (9) continuant à adhérer à la couche (7, 7', 7", 7ⁿ⁺¹) après le contact avec celle-ci,
**caractérisé en ce que** sont différenciés pour l'essentiel deux flux d'air, d'une part d'un dispositif de dosage avec le liant (1, 9) dosé à un dispositif d'application (6) et d'autre part un flux d'air chaud ou chauffé allant du dispositif d'application (6) à la couche à encoller pendant que le liant (1, 9) est activé,
**en ce que** ces deux flux d'air sont mélangés dans le dispositif d'application (6) et **en ce qu'**un raccord et/ou une buse pour liant sont disposés pour servir de moyens de distribution du liant (1, 9) sur une première section de transport pneumatique (21).

2. Procédé selon la revendication 1, **caractérisé en ce que** la surface au moins du liant (1) est fondue par l'activation.

3. Procédé selon une ou plusieurs des revendications précédentes, **caractérisé en ce qu'**un flux d'air chaud (4) est utilisé pour activer le liant (1) et obtenir un liant activé (9).

4. Procédé selon une ou plusieurs des revendications précédentes, **caractérisé en ce que** le liant (1) est dosé avant l'activation.

5. Procédé selon une ou plusieurs des revendications précédentes, **caractérisé en ce que** le liant (1) est introduit dans le flux d'air chaud (4) par un moyen pneumatique ou mécanique, en particulier dosé.

6. Procédé selon une ou plusieurs des revendications précédentes, **caractérisé en ce que** le liant (1) est pulvérisé et/ou introduit dans le flux d'air chaud (4) au moyen d'une buse pour liant (2).

7. Procédé selon une ou plusieurs des revendications précédentes, **caractérisé en ce que** le liant (1) est introduit pour l'essentiel sous forme de poudre dans le flux d'air chaud (4).

8. Procédé selon une ou plusieurs des revendications précédentes, **caractérisé en ce que** le liant (19) dans l'unité de dosage (14) est dosé par gravimétrie, de préférence avec un convoyeur à vis sans fin, en particulier en aussi petite quantité qu'on le souhaite, pour parvenir comme liant (20) dans un flux d'air constant d'un éjecteur de transport (13) dans une conduite d'air sous pression (17).

9. Installation pour l'application d'un liant sur au moins une couche d'une ébauche en plusieurs couches, en particulier au cours de la fabrication d'une pièce moulée en matière plastique armée de fibres avec une telle ébauche, l'ébauche (24) se composant d'au moins deux couches (7, 7', 7", 7ⁿ⁺¹) et au moins une couche (7, 7', 7", 7ⁿ⁺¹) se composant en particulier d'un semi-produit fibreux, au moins un dispositif d'application (6), en particulier mobile, étant disposé dans l'installation pour appliquer un liant (1, 9) sur au moins une couche (7, 7', 7", 7ⁿ⁺¹) et au moins un dispositif de manipulation (15) pour manipuler et assembler les couches (7, 7', 7", 7ⁿ⁺¹) afin de former une ébauche (24), le dispositif d'application (6) comportant des moyens pour distribuer du liant (1) et des moyens pour le transport pneumatique du liant (1, 9) sur une couche (7, 7', 7", 7ⁿ⁺¹) et un moyen étant prévu pour l'activation d'au moins la surface du liant (1) pour produire un liant activé (9) pendant le transport pneumatique, dans laquelle sont différenciés pour l'essentiel deux flux d'air, d'une part d'un dispositif de dosage avec le liant (1, 9) dosé à un dispositif d'application (6) et d'autre part un flux d'air chaud ou chauffé allant du dispositif d'application (6) à la couche à encoller pendant que le liant (1, 9) est activé,
**caractérisée en ce que** ces deux flux d'air sont mélangés dans le dispositif d'application (6) et **en ce qu'**un raccord et/ou une buse pour liant sont disposés pour servir de moyens de distribution du liant (1, 9) sur une première section de transport pneumatique (21).

10. Installation selon la revendication 9, **caractérisée en ce qu'**un compresseur et/ou une source d'air chaud (5) servant à former un flux d'air chaud (4) sont disposés sur le dispositif d'application (6) pour servir de moyens de transport pneumatiques vers la couche (7, 7', 7", 7ⁿ⁺¹).

11. Installation selon une ou plusieurs des revendications 9 à 10, **caractérisée en ce qu'**une source d'air chaud (5) servant à former un flux d'air chaud (4) est prévue pour servir de moyen d'activation du liant (1).
